# EUROPÄISCHE PATENTSCHRIFT

(11) **EP 0 684 415 B1**
(45) Veröffentlichungstag und Bekanntmachung des Hinweises auf die Patenterteilung: **18.08.1999**
(21) Anmeldenummer: 95107529.0
(22) Anmeldetag: 18.05.1995
(51) Int. Cl.: F16K 3/18, F16K 3/02, F16K 51/02

(54) **Ventilmechanik für ein Vakuumventil**
Control mechanism for a vacuum valve
Mécanisme de commande pour une soupape à vide

(30) Priorität: 24.05.1994 DE 4418019
(43) Veröffentlichungstag der Anmeldung: 29.11.1995
(73) Patentinhaber: Bösch, Hubert, 6890 Lustenau (AT)
(72) Erfinder: Bösch, Hubert, 6890 Lustenau (AT)
(74) Vertreter: Riebling, Peter, Dr.-Ing.

(56) Entgegenhaltungen:
- EP-A- 0 164 171
- EP-A- 0 441 646
- FR-A- 1 281 001
- US-A- 3 442 295
- US-A- 4 721 282
- US-A- 5 002 255

## Beschreibung

Die Erfindung betrifft eine Ventilmechanik für ein Vakuumventil, insbesondere für ein partikelfreies Ventil nach dem Oberbegriff des Patentanspruch 1.

Derartige Vakuumventile werden in der Vakuumtechnik zur Steuerung von Gasströmen verwendet. Bei derartigen Unterdruckventilen wird ein Ventilteller über eine Ventilmechanik gesteuert an einen Dichtungssitz angelegt, oder von ihr diesem Dichtungssitz wegbewegt und weggefahren, um den Durchströmungsquerschnitt frei zu machen.

Bei den bisher bekannten Unterdruckventilen war die zur Betätigung des Ventiltellers notwendige Ventilmechanik im vom Unterdruck beaufschlagten Raum angeordnet. Damit bestand-der Nachteil, daß sich im Unterdruckraum reibende Teile befanden, die ggf. auch geschmiert werden mußten.
Bei der Anordnung derartiger Teile im Unterdruckraum besteht die Gefahr, daß sich von den Teilen Partikel lösen können und ebenfalls Partikel des Schmiermittels in den Unterdruckstrom eingetragen werden können.

Ein Ventil oben beschriebener Art zeigt z.B. die europäische Patentanmeldung EP 0 441 646 A1. Es ist ein Schieberventil beschrieben, welches mittels einer Stange durch einen Abtrieb geschlossen bzw. geöffnet werden kann. Hierbei muß das Verschlußteil eine relative Bewegung in zwei Raumachsen durchführen. Dabei befinden sich die Antriebs- und Stellelemente teilweise innerhalb des Unterdruckraumes. Es besteht somit die Gefahr einer Partikelgenerierung durch diese Antriebs- und Stellelemente was für bestimmte Anwendungen nicht erwünscht ist.

Ein derartiges Ventil ist demzufolge z.B. für die Halbleiter-Industrie nicht verwendbar, da im Unterdruckraum nicht die notwendige Partikelfreiheit garantiert werden kann.

Der Erfindung liegt deshalb die Aufgabe zugrunde, eine Ventilmechanik für ein Unterdruckventil der eingangs genannten Art so weiterzubilden, daß ein partikel freies Ventil geschaffen wird, bei dem keinerlei Partikel in den Unterdruckraum eingetragen werden können.

Zur Lösung der gestellten Aufgabe ist die Erfindung durch die technische Lehre des Anspruchs 1 gekennzeichnet.

Wesentliches Merkmal der Erfindung ist, daß der Unterdruckraum frei von einer relativen Bewegung zueinander ausführenden Stellelementen ist und der Bewegungsablauf des Ventiltellers zwangsgesteuert mittels mindestens einer Kulissenführung von außerhalb des Unterdruckraumes erfolgt.

Mit der gegebenen technischen Lehre besteht der wesentliche Vorteil, daß nun sämtliche reibenden und ggf. auch geschmierten Teile außerhalb des Unterdruckraumes angeordnet sind und es daher vollständig ausgeschlossen ist, daß irgendwelche Partikel aus dieser Mechanik in den vom Unterdruck beaufschlagten Raum gelangt und die Gasströme verschmutzt.

Für die Ausbildung der Ventilmechanik gibt es eine Reihe von Möglichkeiten, die alle von dem Erfindungsgedanken umfaßt sein sollen.

Im wesentlichen werden Ausführungsformen bevorzugt, die besonders einfach und betriebssicher arbeiten. Eine derartige Ausführung besteht darin, daß man die Verschiebung der Stange, die mit dem Ventilteller verbunden ist, über einen Kolben bewerkstelligt, der über ein Druckmedium verschiebbar in einem Zylindergehäuse angetrieben ist, wobei der Kolben mit seiner Bewegung dann die Stange mit dem Ventilteller mitnimmt.

Im Bereich dieses Kolbens ist eine Bewegungssteuerung angeordnet, die dafür sorgt, daß der Ventilteller in seine Schließ- und in seine Offenstellung bewegt werden kann, welche Bewegungssteuerung als Kulissensteuerung ausgebildet ist.

In einer anderen bevorzugten Ausgestaltung der Erfindung ist es vorgesehen, daß die Kulissensteuerung der Stange (Kippbewegung und Längsverschiebung) von getrennten Antrieben bewerkstelligt wird, wobei jedem Antrieb ein jeweiliger Kolben zugeordnet ist.

Die Erfindung beschränkt sich also nicht auf die Ausbildung einer einzigen Kulissensteuerung, sondern sie beansprucht als wesentlich, daß die Bewegungssteuerung als solche außerhalb des vom Unterdruck beaufschlagten Raumes angeordnet ist und die Bewegungssteuerung des Ventiltellers auch mehrere Kulissensteuerungen aufweisen kann.

Ein weiterer wesentlicher Vorteil der Erfindung liegt darin, daß zum Öffnen und Schließen des Ventils keine translatorischen Bewegungen durchgeführt werden, sondern daß eine einfache, leicht zu beherrschende Kippbewegung durchgeführt wird. Hierbei ist es vorgesehen, daß die Stange, an welcher der Ventilteller angeordnet ist, in einem Kipplager schwenkbar gelagert ist, wobei an dem einen, freien Ende der als zweiarmigen Hebels ausgebildeten Stange der Ventilteller und am anderen Hebelende die Kippmechanik angeordnet ist.

Hierbei ist die Kippmechanik als Kulissensteuerung ausgebildet.

Es können andere Kippantriebe in Verbindung mit der Kulissensteuerung verwendet werden, wie z.B. ein Elektromagnet, oder ein hydraulisch oder pneumatisch bewegter Kolben.

Der Kippantrieb kann auch nur in einer Richtung angetrieben sein, während die Rückstellbewegung über eine entsprechende Rückstellfeder erfolgt.

Im folgenden wird die Erfindung anhand von mehrere Ausführungswege darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert einen Schnitt durchein Unterdruckventil nach der Erfindung in Offenstellung,
- Figur 1a:: Führungsschlitz des Ventilgehäuses,
- Figur 2:: das Ventil nach Figur 1 in Schließstellung,
- Figur 3:: das Ventil nach den Figuren 1 und 2 in Schließstellung,

In einem Gehäuse 1 eines Unterdruckventils ist ein oberer und ein unterer Flanschanschluß 2,3 angeordnet, durch den entsprechende Gasströme geleitet werden.

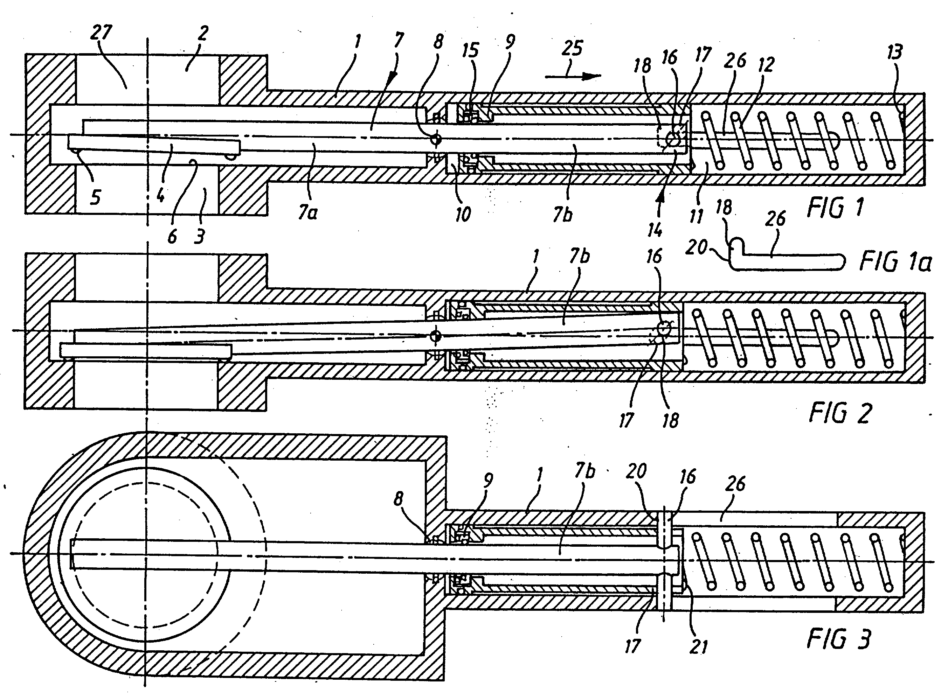

Die Figur 1 zeigt nicht die vollständige Offenstellung des Ventils, weil in der vollständigen Offenstellung der Ventilteller 4 in Pfeilrichtung 25 verschoben wird, und aus dem Bereich der Flanschanschlüsse 2,3 gezogen wird.

Der Ventilteller 4 ist fest mit einer Stange 7 verbunden, die als zweiarmiger Hebel ausgebildet ist, wobei das eine Stangenende 7a zur Halterung des Ventiltellers 4 und das andere Stangenende 7b zur Bewegungssteuerung der Stange vor der Stange 7 vorgesehen ist. Die Stange 7 ist hierbei in einem Kipplager 8 im Gehäuse 1 schwenkbar gelagert.

Der Ventilteller 4 weist eine Dichtung 5 auf, die mit einem Ventilsitz 6 am Flanschanschluß 3 zusammenwirkt.

Zur Bewegungssteuerung (Längsverschiebung) der Stange 7 und des Ventiltellers 4 ist ein Kolben 9 vorgesehen, der in einem Zylinderraum 10 des Gehäuses 1 in Pfeilrichtung 25 und in Gegenrichtung hierzu verschiebbar ist. Hierzu ist der Kolben 9 mit einer Abdichtung 15 gegenüber dem Zylindergehäuse abgedichtet, und es ist ein vorderer Zylinderraum 10 vorhanden.

Die Rückstellbewegung des Kolbens 9 verfolgt über eine Feder 12, die sich mit ihrem einen Ende an einem Anschlag 13 am Gehäuse 1 anlegt und mit ihrem anderen Ende an einem Anschlag 21 am Kolben 9.

Der hintere Zylinderraum 11 ist also nicht von einem Druckmedium beaufschlagt.

In einer anderen nicht näher dargestellten Ausführungsform kann jedoch die Feder 12 entfallen und statt dessen der Zylinderraum 11 ebenfalls mit einem Druckmedium beaufschlagt werden.

Zur Längsverschiebung des Kolbens 9 wird der Zylinder raum 10 mit Druck beaufschlagt, wobei gleichzeitig am Stangenende 7b der Stange 7 drehfest ein Querbolzen 16 angeordnet ist, der in der vorderen Verschiebestellung der Stange 7 sich an einem Anschlag 20 am Gehäuse 1 anlegt.

Wird der Druckraum 10 mit Druck beaufschlagt, dann fährt der Kolben 9 in Pfeilrichtung 25 in Richtung Anschlag 15 wobei gleichzeitig der Querbolzen 16 von seiner oberen Anlagestellung in der Schrägführung 17 in die untere Anlagestellung (vergl. Figur 1) gelangt und somit dafür gesorgt wird, daß erst der Ventilteller 4 geöffnet wird und danach die Stange 7 sich nach hinten bewegt. Es handelt sich also um eine Zwangsführung des Ventiltellers 4 und damit der gesamten Kippsteuerung, weil bei einer Längsverschiebung des Kolbens 9 in Pfeilrichtung 25 der Querbolzen in seine untere Stellung in der Schrägführung 17 gelangt, und erst dann bei vom Ventilsitz 6 abgehobenen Ventilteller 4 eine Verschiebung der Stange 7 in Pfeilrichtung 25 gelingt.

Umgekehrt erfolgt das Schließen des Ventiltellers 4 dadurch, daß der Kolben 9 in Gegenrichtung zur eingezeichneten Pfeilrichtung 25 gemäß Figur 2 nach vorne verfahren wird, wobei diese Verfahrbewegung unter Einwirkung der Feder 12 erfolgt und hierbei der Zylinderraum 10 entlastet ist.

In dieser nach vorne gerichteten Bewegung gelangt der Querbolzen 16 in die obere Anschlagstellung im Bereich der Schrägführung 17 gemäß Figur 2 und damit verkippt die Stange 7 um das Kipplager 8 und die Dichtung 5 legt sich somit am Ventilsitz 6 an.

Die gleichzeitig noch dargestellte Geradführung 18 ist eine Geradführung für den Querbolzen 16.

Hierbei sind in den Seitenwandungen des Gehäuses jeweils einander gegenüberliegende, zueinander fluchtende Schlitze 26 angeordnet, in die jeweils ein Ende des Querbolzens 16 eingreift.

Das Schlitzende des Schlitzes 26 ist in Form der gezeigten Geradführung 18 erweitert, wie dies in Figur 1a dargestellt ist.

Solange sich der Querbolzen 16 im Bereich des Schlitzes 26 befindet, kann die Stange 7 nicht um das Kipplager 8 verkippt werden.

Sobald sich aber der Querbolzen 16 am Ende des Schlitzes 26 unter der Kraft der Feder 12 bei gleichzeitig entlastetem Druckraum 10 in den Bereich der Geradführung 18 bewegt, legt sich der Querbolzen 16 an dem Anschlag 20 an. Dieser Anschlag 20 hat eine größere vertikale Länge, als die Höhe des Schlitzes 26 ist, und daher kann der Querbolzen im Bereich dieses Anschlages 20 um das Kipplager 8 herum verkippt werden.

Die hier dargestellte Kulisse 14 kann auch mit anderen Mitteln bewerkstelligt werden. Die Erfindung ist also nicht auf die Funktion der Kulisse beschränkt.

### Zeichnungs-Legende

- 1: Gehäuse
- 2: Flanschanschluß
- 3: "
- 4: Ventilteller
- 5: Dichtung
- 6: Ventilsitz
- 7: Stange
- 7a: Stangenende
- 7b: "
- 8: Kipplager
- 9: Kolben
- 10: Zylinderraum
- 11: "
- 12: Feder
- 13: Anschlag
- 14: Kulisse
- 15: Abdichtung
- 16: Querbolzen
- 17: Schrägführung
- 18: Geradführung
- 19 20: Anschlag
- 21: Anschlag
- 22 23 24 25 26: Schlitz
- 27: Unterdruckraum

## Patentansprüche

1. Ventilmechanik für ein Vakuum-Schieberventil, insbesondere ein partikelfreies Ventil zum Öffnen und Schließen einer Durchgangsöffnung (2 ,3) in einem Ventilgehäuse (1), bestehend aus mindestens einem Antrieb, der mindestens einen im Unterdruckraum (27) angeordneten Ventilteller (4) über eine Bewegung in zwei Raumachsen dichtend vor die Durchgangsöffnung bewegt, wobei der Ventilteller (4) mit mindestens einer Stange (7) verbunden ist, die abdichtend aus dem Unterdruckraum (27) nach außen geführt ist und an welcher der Antrieb angreift, **dadurch gekennzeichnet**, daß der Unterdruckraum (27) frei von eine relative Bewegung zueinander ausführenden Stellelementen ist und der Bewegungsablauf des Ventiltellers (4) zwangsgesteuert mittels mindestens einer Kulissenführung (14; 16, 17, 18; 26) von außerhalb des Unterdruckraumes (27) erfolgt.

2. Ventilmechanik nach Anspruch 1, **dadurch gekennzeichnet**, daß der Ventilteller (4) über die Stange (7) mittels eines Kolbens (9) in Längsrichtung (25) beweglich ist.

3. Ventilmechanik nach Anspruch 2, **dadurch gekennzeichnet**, daß der Kolben (9) verschiebbar in einem Zylinderraum (10) des Gehäuses (1) angeordnet ist.

4. Ventilmechanik nach einem der Ansprüche 1 - 3, **dadurch gekennzeichnet**, daß die Stange (7) auf einer Achse (8) beweglich gelagert ist.

5. Ventilmechanik nach Anspruch 4, **dadurch gekennzeichnet**, daß die Bewegungssteuerung der Stange (7) in Längsrichtung (25) und die Bewegungssteuerung um die Achse (8) durch getrennte Antriebe erfolgt.

6. Ventilmechanik nach einem der Ansprüche 2 - 5, **dadurch gekennzeichnet**, daß die Rückstellung des Kolbens (9) entgegen der Bewegungsrichtung (25) mittels einer Rückstellfeder' (12) erfolgt.

7. Ventilmechanik nach einem der Ansprüche 1 - 6, **dadurch gekennzeichnet,** daß zwischen der Stange (7) und dem Gehäuse (1) ein Metallbalg angeordnet ist.

## Claims

1. Valve mechanism for a vacuum sliding valve, especially a particle-free valve for opening and closing a through opening (2,3) in a valve housing (1), said mechanism consisting of at least one drive which moves at least one valve disc (4) disposed in the vacuum chamber (27) via a movement in two spatial axes in front of the through opening, forming a seal, the valve disc (4) being connected to at least one rod (7) which is sealingly guided towards the outside from the vacuum chamber (27) and with which the drive engages, **characterised in that** the vacuum chamber (27) is free of adjusting members carrying out a relative movement towards one another, and the movement course of the valve disc (4) is forcibly controlled from outside the vacuum chamber (27) by means of at least one connecting link guide (14;16,17,18; 26).

2. Valve mechanism according to claim 1, **characterised in that** the valve disc (4) is movable in a longitudinal direction (25) via the rod (7) by means of a piston (9).

3. Valve mechanism according to claim 2, **characterised in that** the piston (9) is arranged displaceable in a cylinder space (10) of the housing (1).

4. Valve mechanism according to one of claims 1 to 3, **characterised in that** the rod (7) is movably mounted on an axis (8).

5. Valve mechanism according to claim 4, **characterised in that** the control of the movement of the rod (7) in a longitudinal direction (25) and the control of the movement about the axis (8) is effected through separate drives.

6. Valve mechanism according to one of claims 2 to 5, **characterised in that** the return of the piston (9) against the direction of movement (25) is effected by means of a return spring (12).

7. Valve mechanism according to one of claims 1 to 6, **characterised in that** a metal bellows is arranged between the rod (7) and the housing (1).

## Revendications

1. Mécanisme pour un robinet-vanne à vide, en particulier pour une soupape sans particules, pour ouvrir et fermer une ouverture de passage (2, 3) dans une enveloppe de soupape (1), formé d'au moins un entraînement qui amène devant l'ouverture de passage, de façon étanche, grâce à un mouvement suivant deux axes dans l'espace, au moins une tête de soupape (4) disposée dans l'espace à vide (27), la tête de soupape (4) étant reliée à au moins une tige (7) qui sort de l'espace à vide (27) de façon étanche et sur laquelle agit l'entraînement, **caractérisé** en ce que l'espace à vide (27) ne contient pas d'éléments de réglage décrivant un mouvement relatif les uns par rapport aux autres, et le mouvement de la tête de soupape (4) se fait de l'extérieur de l'espace à vide (27), grâce à une commande forcée, à l'aide d'au moins un guidage à coulisse (14 ; 16, 17, 18 ; 26).

2. Mécanisme de soupape selon la revendication 1, **caractérisé** en ce que la tête de soupape (4) est mobile dans le sens longitudinal (25) grâce à un piston (9), par l'intermédiaire de la tige (7).

3. Mécanisme de soupape selon la revendication 2, **caractérisé** en ce que le piston (9) est disposé, mobile, dans un espace cylindrique (10) de l'enveloppe (1).

4. Mécanisme de soupape selon l'une des revendications 1 à 3, **caractérisé** en ce que la tige (7) est montée, mobile, sur un axe (8).

5. Mécanisme de soupape selon la revendication 4, **caractérisé** en ce que la commande de mouvement de la tige (7) dans le sens longitudinal (25) et la commande de mouvement autour de l'axe (8) se font grâce à des entraînements séparés.

6. Mécanisme de soupape selon l'une des revendications 2 à 5, **caractérisé** en ce que le rappel du piston (9) en sens inverse par rapport au sens de mouvement (25) se fait grâce à un ressort de rappel (12).

7. Mécanisme de soupape selon l'une des revendications 1 à 6, **caractérisé** en ce qu'un soufflet métallique est disposé entre la tige (7) et l'enveloppe (1).
